# EUROPEAN PATENT APPLICATION

(11) **EP 4 786 113 A1**
(43) Date of publication of application: **05.08.2026**
(21) Application number: 25155679.1
(22) Date of filing: 03.02.2025
(51) Int. Cl.: B25J 9/08

(54) **COUPLING DEVICE FOR A MODULAR ROBOT, COUPLING UNIT, MODULE FOR A MODULAR ROBOT, MODULAR ROBOT AND METHOD FOR AT LEAST PARTIALLY ASSEMBLING A MODULAR ROBOT**

(71) Applicant: RobCo GmbH, 80333 München (DE)
(72) Inventor: AKIM, Milan, 80333 München (DE); MAROLDT, Paul, 80333 München (DE)
(74) Representative: Banzhaf, Felicita

(57) **Abstract**

The present invention relates to a coupling device (120, 130) for coupling two modules (110) of a modular robot, to a coupling unit (121, 131; 122, 132), to a module (110) for a modular robot (100), to a modular robot (100), and to a method for assembling, wherein the coupling device (120, 130) comprises first and second coupling units (121, 131; 122, 132) configured to be releasably coupled one to each other, wherein the first coupling unit (121, 131) comprises a coupling portion (126, 136) protruding from a first surface (124, 134) in coupling direction and having an outer surface (128, 138), wherein the second coupling unit (122, 132) comprises a recess (127, 137) for at least partially receiving the protruding coupling portion (126, 136) of the first coupling unit (121, 131) and having an inner surface (129, 139), and wherein an outer contour of the protruding portion (126, 136) of the first coupling unit (121, 131) and an inner contour of the recess of the second coupling unit (122, 132) each have a polygon-like shape in at least one sectional plane perpendicular to the coupling direction (CD).

## Description

### FIELD OF THE INVENTION

The present invention generally relates to a coupling device for coupling two modules of a modular robot, in particular for coupling two modules of a modular industrial robot, wherein the coupling device comprises a first coupling unit, in particular a first connector, and a second coupling unit, in particular a second connector, each being configured to be mounted on a respective module of a modular robot, and further being configured to be releasably coupled one to each other in a coupling direction.

Further, the present invention relates to a coupling unit, in particular to a connector, configured for a coupling device as described above.

Additionally, the present invention relates to a module for a modular robot, in particular for a modular industrial robot, comprising at least one coupling unit of a coupling device as described above.

Furthermore, the invention relates to a modular robot, in particular a modular industrial robot, comprising a coupling device as described above and/or at least one coupling unit as described above.

The invention also relates to a method for at least partially assembling a modular robot, in particular for at least partially assembling a modular industrial robot, as described above.

### TECHNICAL BACKGROUND

The invention relates to a coupling device for a robot for coupling two robot segments, in particular for an industrial robot for handling objects.

Robots used in industrial manufacturing and assembly usually have a robot arm, the proximal end of which is attached to a fixed base or a base that can be moved by means of a slide, and the distal end of which usually has a tool attached. The robot arm usually comprises several segments that can be moved against each other by motors.

Modular robots are known in which the robot segments mentioned can be changed relatively easily in order to be able to configure the robot specifically for specific tasks on a case-by-case basis.

Coupling devices for such modular robots are known which comprise two coupling sub-devices that are pressed together by an additional clamping ring.

DE102021121113B3, for example, discloses a coupling device for a robot for coupling two robot segments, which has two coupling sub-devices, which can each be firmly connected to a robot segment, and which are designed for detachable coupling to one another in a coupling direction. A first coupling part device has a housing with a surface and a plurality of coupling pins which protrude beyond the surface. A second coupling part device has a housing with a surface and a plurality of coupling recesses for receiving the coupling pins. It is proposed that a control member is provided for locking the coupling sub-devices, which control member is guided through the housing of the second coupling sub-device and can be translated in a control member direction orthogonal to the coupling direction between a releasing end position and a locking end position.

WO2018130447A1 discloses a releasable joint between two component flanges, wherein the flanges have a number of teeth on each part that is pressed into contact by clamps, screws, or other means. The releasable joint assembly is suitable for establishing a robot joint between a first and second component each having an interlocked annular flange with respective surfaces, and where these flanges are held in place by a clamp.

When designing and developing such coupling devices, the challenge is to ensure the desired coupling properties, such as the safe and reliable transmission of forces and/or torques of defined quantities and/or of data, signals and/or electrical energy, while also allow a quick release of the coupling in order to be able to adapt a modular robot quickly and flexibly to the respective application. Further, space requirement has to be kept as small as possible, e.g., in the axial direction of the robot arm, and in terms of good accessibility to difficult-to-reach places, especially in the radial direction.

Against this background, the technical problem underlying the present invention is to provide an alternative, in particular an improved coupling device for a modular robot, an alternative, in particular improved coupling unit, an alternative, in particular improved modular robot and an alternative, in particular an improved method for at least partially assembling a modular robot, wherein the coupling device can in particular be manufactured with reasonable effort, allows a very easy and quick coupling and de-coupling of robot modules, and a secure transmission of a required torque between coupled robot modules of a modular robot during use of the robot.

### SUMMARY OF THE INVENTION

With respect to the above, a coupling device, a coupling unit, a module for a modular robot, a modular robot, and a method for at least partially assembling a modular robot according to the respective independent patent claims are provided. Advantageous embodiments of the present invention are defined by the dependent patent claims, the description, and the figures. The wording of the claims is hereby made part of the description by express reference.

According to a first aspect of the present invention, a coupling device for coupling two modules of a modular robot, in particular for coupling two modules of a modular industrial robot, is provided, wherein the coupling device comprises a first coupling unit, in particular a first connector, and a second coupling unit, in particular a second connector, each being configured to be mounted on a respective module of a modular robot, and further being configured to be releasably coupled one to each other in a coupling direction. The first coupling unit comprises a first surface and a coupling portion protruding from the first surface in coupling direction and having an outer surface, and the second coupling unit comprises a second surface and a recess for at least partially receiving the protruding coupling portion of the first coupling unit and having an inner surface. Each of an outer contour of the protruding portion of the first coupling unit and an inner contour of the recess of the second coupling unit each has a polygon-like shape in at least one sectional plane perpendicular to the coupling direction, at least in sections.

A "coupling device" in the sense of the present application may denote in particular a mechanical and/or electromechanical interface adapted to detachably connect at least two or specifically two separate modules one to each other, in particular two modules of a modular robot. The coupling device may in particular facilitate secure physical attachment of the modules to be coupled. The coupling device may in particular permit repeated attachment and detachment without damage.

In at least one possible embodiment, in addition to the elements or parts described above, the coupling device may include one or more further complementary connecting elements on each module adapted one to each other, such as, e.g., latches, magnets, hooks, or interlocking features, and/may further comprise one or more alignment mechanisms to ensure proper orientation during coupling and decoupling. It may be actuated manually, semi-automatically, or fully automatically, with provisions for reliable mechanical retention and electrical connectivity where required.

A "module" in the sense of the present application may in particular denote a modular robot segment, in particular a structural and functional unit of a modular industrial robot, designed to be detachably or permanently interconnected with at least one or specifically one other module or robot segment to form a complete assembly of a modular robot. The module or robot segment may comprise a housing or framework and may include one or more of the following: actuation components, sensors, power supply elements, data transmission interfaces, and control electronics. The module or robot segment may be configured to provide a specific function within a modular robot, such as, e.g., articulation, extension, rotation, gripping, or any other task-specific operation which can be performed by a robot, in particular by an industrial robot.

At least one "module" may comprise at least one outer housing and/or an outer hollow shaft and, in particular, at least one inner hollow shaft, wherein cables and/or power supply lines and/or data lines may be or are routed through the inner hollow shaft and thereby being protected, in particular from rotating parts outside of the inner hollow shaft.

The inner hollow shaft may in particular be designed to be stationary, i.e., the inner hollow shaft is preferably not rotatably mounted relative to the outer housing or an outer hollow shaft of the module.

A "modular robot" in the sense of the present application may in particular denote a robot, in particular an industrial robot, being assembled from at least two modules or robot segments. Each module may in particular provide a specific mechanical, actuation, sensing, power, or control function. The modules may in particular be designed to be coupled one to each other by coupling units and/or by a coupling device. A modular robot may in particular be configured for being reassembled, expanded, or modified multiple times in its life to be adapted to varying industrial tasks, such as, e.g., material handling, assembly, welding, painting, machining, inspection and/or packing or the like, enhancing versatility, scalability, and ease of maintenance. A modular robot may be configured to support automated or semi-automated reconfiguration to reduce configuration time and increase efficiency.

An "industrial robot" in the sense of the present application may in particular denote a robot configured to perform automated tasks in industrial environment, such as e.g., material handling, assembly, welding, painting, machining, inspection, and/or packaging or the like.

A "modular industrial robot" in the sense of the present application may in particular denote an industrial robot which is a modular robot comprising at least to modules, in particular two modules being coupled via a coupling device.

A "coupling unit" or "connector" in the sense of the present application may in particular denote a mechanical and/or electromechanical interface assembly or unit being configured to detachably connect at least two or specifically two modules of a modular robot one to each other, ensuring secure physical attachment and, optionally, enabling the transmission of power, data, and control signals between the connected modules. The coupling unit may include one or more complementary coupling elements, such as interlocking mechanical features, magnetic latches, bayonet fittings, and/or pin-and-socket connectors, designed to provide both structural stability and proper alignment during assembly. The coupling unit may be actuated manually, semi-automatically, or fully automatically and may incorporate locking mechanisms, alignment guides, and/or safety features to prevent unintended disconnection during operation. It facilitates the modular reconfiguration, expansion, and maintenance of the robot system by allowing rapid and reliable attachment or detachment of modules.

The term "to be releasably coupled one to each other" in the sense of the present application main particular means that components are connected or joined in a manner that allows them to be securely held together during operation but can be intentionally separated without causing damage to either component, wherein a release may in particular be performed manually, semi-automatically, or fully automatically and may require a specific action, tool, or trigger to disengage the connection.

A "coupling direction" in the sense of the present application may in particular denote a direction, path, or axis, along the parts to be coupled have to be moved and brought together for coupling, in particular to establish a secure mechanical and/or electromechanical connection. The coupling direction in particular defines the path for relative movement required for proper engagement of the coupling elements, such as, e.g., linear insertion, rotational alignment, or axial sliding. It ensures correct positioning and alignment of the components for secure attachment and may be defined by geometric constraints or guiding features of the coupling mechanism to facilitate reliable and repeatable coupling.

In at least one possible embodiment, the coupling direction in particular extends along a center axis of at least one coupling unit and/or along a longitudinal axis of a module. The center axis of at least one coupling unit and the longitudinal axis of a module, the coupling unit is mounted to, may in particular be concentric or coincide or "be in flush".

A "polygon-like shape" in the sense of the present application may in particular denote a shape of a figure or contour line which looks at least similar to a polygon or is a polygon. In particular, a figure based on a polygon shape but, for example, comprising at least one rounded corner, in particular at least one convex or concave rounded corner, and/or at least one slightly curved side, in particular at least one slightly convex or concave curved sides, may be named having a "polygon-like shape".

Due to the polygon-like shapes of the outer contour of the protruding portion and of the inner contour of the recess of a coupling device according to the present invention, the first coupling unit and the second coupling unit can securely be coupled "torque-proof", i.e., able to transfer a torque, in particular around an axis extending parallel to the coupling direction in a very easy manner with minimum space required and enabling a coupling which can quickly be released in order to be able to adapt a modular robot quickly and flexibly to the respective application. As a result, a coupling device can be provided which allows a safe and reliable transmission of torque of defined quantities between two robot modules being coupled with such a coupling device. With an appropriate design of the protruding portion and the recess, in some embodiments of a coupling device according to the present invention a backlash-free torque transmission may even be achieved. Due to the small space requirements, a good accessibility to difficult-to-reach places, especially in the radial direction, can be achieved.

In at least one possible embodiment of the coupling device, the protruding coupling portion is at least partly, preferably complete, a male coupling portion, and the recess forms a corresponding counterpart, in particular a female coupling portion. The coupling device may in particular be configured such that in a coupled state of the coupling device the protruding coupling portion of the first coupling unit projects into the recess of the second coupling unit. Due to the polygon-like shape of the protruding coupling portion of the first coupling unit and the recess of the second coupling unit an advantageous form lock ("form fit") may be enabled improving torque transmission.

In at least one possible embodiment, in a coupled state of the coupling device the outer surface of the protruding coupling portion preferably abuts at least partially against the inner surface of the recess, wherein in particular a circumferential outer surface of the protruding coupling section abuts at least partially against a circumferential inner surface of the recess thereby creating a friction(-locked) connection between the circumferential outer surface of the protruding coupling section and the inner surface of the recess. Thereby, a friction-lock can be created, enhancing torque transmission, in particular backlash-free torque transmission.

In at least one possible embodiment, the coupling units, in particular the coupling device, may be configured for use in a modular robot, in particular for a modular robot which may be configured for use in an industrial environment, for example for industrial manufacturing.

The coupling units, in particular the coupling device, may in particular be configured for use in a modular robot which may in particular be configured for carrying up to 100 kg at its maximum reach (=maximum load which can be carried by the modular robot). The robot may in particular have a reach of at least 500 mm, 750 mm, 1000 mm, 1500 mm, 2000 mm, 2250 mm, 2500 mm, 2750 mm, 3000 mm, or 3500 mm. The robot may be configured for carrying at least 2 kg, 3 kg, 4 kg, 5 kg, 10 kg, 20 kg, 30 kg, 40 kg, 45 kg, 50 kg, 55 kg, 60 kg, 70 kg, 80 kg, or 90 kg at its maximum reach. The robot may in particular have a reach up to 4000 mm. The coupling device may in particular be configured for use in a modular robot which may have up to eight degrees of freedom.

In at least one possible embodiment of a coupling device a maximum protrusion height of the coupling portion in coupling direction may in particular be less than 20% of a maximum outer diameter of the first surface, in particular less than 15%, 14%, 13%, 12%, 11 %, 10%, 9%, 8%, 7% or 6% of a maximum outer diameter of the first surface, wherein a minimum protrusion height of the coupling portion in coupling direction may in particular be at least 3%, 4% or 5% of the maximum outer diameter of the first surface. Thereby, a coupling device with a small space requirement in coupling direction relative to its outer diameter can be provided which still allows sufficient torque transmission in a lot of use cases.

In at least one possible embodiment of a coupling device a minimum protrusion height of the coupling portion in coupling direction may in particular be at least 3%, preferably at least 4% of the maximum outer diameter of the first surface, but in particular at least 6%, 7%, 8%, 9%, 10%, 11%, 12%, 13%, 14% of the maximum outer diameter of the first surface. Thereby, a coupling device with a small space requirement in coupling direction relative to its outer diameter can be provided which still allows sufficient torque transmission in a lot of use cases.

In at least one possible embodiment of a coupling device, the first surface of the first coupling unit and/or the second surface of the second coupling unit may in particular have a circular outer circumferential shape, at least partly, preferably over its whole circumference. Thereby, a coupling device with the same space requirement in all radial directions with respect to coupling direction can be provided what is advantageous for a modular robot to be suitable for different use cases and under different geometric constraints where to work.

In at least one possible embodiment of a coupling device, the maximum overall height of the first coupling unit with the protruding coupling portion may in coupling direction in particular be in a range with a lower limit of 5%, 10%, 15% or 20% and an upper limit of 10%, 15% or 20% of the maximum outer diameter of the first surface. Thereby, a coupling device with a small space requirement in coupling direction relative to its outer diameter can be provided which still allows sufficient torque transmission in a lot of use cases.

In at least one possible embodiment of a coupling device, the maximum overall height of the second coupling unit with the recess may in coupling direction in particular be in a range with a lower limit of 2,5%, 5%, 10% or 15% and an upper limit of 5%, 10% or 15% of the of the maximum outer diameter of the second surface. Thereby, a coupling device with a small space requirement in coupling direction relative to its outer diameter can be provided which still allows sufficient torque transmission in a lot of use cases.

In at least one possible embodiment of a coupling device, in a coupled state of the coupling device the maximum overall height of the coupling device in coupling direction may in particular be in a range with a lower limit of 2,5%, 5%, 10% or 15% and an upper limit of 5%, 10% or 15% of the of the maximum outer diameter of the second surface. Thereby, a coupling device with a small space requirement in coupling direction relative to its outer diameter can be provided which still allows sufficient torque transmission in a lot of use cases.

In at least one possible embodiment of the coupling device, the outer contour and the inner contour of the coupling device may each have a polygon-like shape with at least 3 sides, in particular with at least 4 or 5 sides, preferably with at least 6 or 8 sides, but in particular with no more than 20 sides. The outer surface may in particular comprise a corresponding number of outer side surface sections, each forming a part of the outer surface, wherein the inner surface may in particular comprise a corresponding number of inner side surface sections each forming a part of the inner surface. Thereby, a coupling device with a small space requirement in coupling direction can be provided which enables sufficient torque transmission in a lot of use cases and quick and easy coupling and releasing.

In at least one possible embodiment, the outer contour and the inner contour may in particular each have a polygon-like shape of a regular polygon or a polygon-like shape of an irregular polygon.

A "regular polygon" in the sense of the present application may in particular denote a figure or a contour line with a polygon-like shape or a polygon where both its side lengths and its inner angles are constrained to be equal.

An "irregular polygon" in the sense of the present application may in particular denote a figure or a contour line with a polygon-like shape or a polygon with at least one side length being different from the other ones, and with at least one inner angle being different from the other ones.

A regular polygon or regular polygon-like shape does not require a defined angle orientation around a coupling axis and allows a faster and easier coupling. However, sometimes such an alignment is wanted or even necessary for several reasons. In this cases an irregular polygon or irregular polygon-like shape can be more appropriate.

In at least one possible embodiment of a coupling device, the outer contour and the inner contour each have a polygon-like shape with at least 4 sides, in particular with at least 5 sides, preferably with at least 6 or 8 sides, but in particular not with more than 20 sides, wherein in particular the outer surface comprises a corresponding number of outer side surface sections each forming a part of the outer surface, and/or wherein the inner surface comprises a corresponding number of inner side surface sections each forming a part of the inner surface. Thereby, the first coupling unit and the second coupling unit can securely be coupled "torque-proof' in a very easy manner with minimum space required and enabling a backlash-free torque transmission may even be achieved.

In at least one possible embodiment of a coupling device, the outer contour and the inner contour may each have a polygon-like shape with an even number of sides, for example with 4, 6, 8, 10, 12, 14, 16, 18 or 20 sides. In an alternative embodiment, the outer contour, and the inner contour each may have a polygon-like shape with an uneven number of sides, for example with 3, 5, 7, 9, 11, 13, 15, 17, 19 or 21 sides. However, an even number of sides is preferred since this allows a better (regular) distribution of mounting elements around the contours in the associated first and second surfaces, and there with an in particular more space saving arrangement of the mounting elements for mounting the coupling units to a module, in particular for mounting the coupling units on a front or upper side of a module or respectively on a bottom side of the module.

In at least one possible embodiment of the coupling device, the outer contour and the inner contour may each have a polygon-like shape of an irregular polygon with at least one inner angle between two neighbored sides of the irregular polygon-liked shape being different from the remaining other inner angles. Thereby, in an easy way an alignment of the two coupling parts one to each other for coupling can be ensured, in particular only one option for coupling.

In at least one further possible embodiment, the irregular polygon-like shape may in particular comprise three different types of inner angles, in particular one with a first inner angle value, two with a second inner angle value and the remaining ones with a third inner angle value. Thereby, in a very easy way an alignment of the two coupling parts one to each other for coupling can be ensured, in particular only one option for coupling.

In at least one possible embodiment of the coupling device, the outer contour and the inner contour may each have a polygon-like shape of an irregular polygon with at least one inner angle between two neighbored sides of the irregular polygon-liked shape being different from the remaining other inner angles, wherein the irregular polygon-liked shape may in particular comprise at least two types of inner angles, in particular one with a first inner angle value, and at least one with a second inner angle value.

In at least one possible embodiment of the coupling device, in particular in a preferred embodiment, the irregular polygon-liked shape may in particular comprise three different types of inner angles, in particular one with a first inner angle value, two with a second inner angle value and the remaining ones with a third inner angle value.

For improved coupling, in particular for improved torque transmission, in at least one possible embodiment of the coupling device, at least one of the outer side surface sections of the outer surface of the protruding portion of the first coupling unit may in a protruding direction be inclined inwards towards a center axis of the protruding portion extending parallel to the coupling direction, wherein in particular at least one of the inner side surface sections of the inner surface of the recess of the second coupling unit in a recess direction may be inclined inwards into the recess towards a center axis of the recess extending parallel to the coupling direction, wherein the inclinations of the outer an inner surfaces preferably correspond one to each other. Thereby, a very easy coupling is achieved since the coupling units can simply be plugged into one another, whilst also the strength of the coupling, in particular torque transmission, can significantly be increased, in particular under addition of an axial load which may be applied, for example by an additional clamping device (optional).

In at least one embodiment of the coupling device, the first inclination angle may be in particular 10°, 20°, 25°, 30°, 35°, 40°, 45°, 50°, 55° or 60°, and/or the second inclination angle may in particular be at least substantially, preferably nominally exactly, the same as the first inclination angle in order to correspond with the first inclination angle and enable plugging into one each other.

In a further embodiment of the coupling device, in particular all of the outer side surface sections of the outer surface of the protruding portion of the first coupling unit may be in a protruding direction inclined inwards by a first inclination angle towards a center axis of the protruding portion extending parallel to the coupling direction. Additionally, all of the inner side surface sections of the inner surface of the recess of the second coupling unit may be in a recess direction inclined inwards by a second inclination angle towards a center axis of the recess extending parallel to the coupling direction.

In the sense of this application, therein the term "exactly" includes the exact (i.e., the same) angular values measured in degrees up to three decimal places, but also angular values in a range of normal (i.e., medium class) manufacturing tolerances.

In at least one embodiment of the coupling device, in a coupled state of the coupling device the center axis of the protruding portion and the center axis of the recess may coincide, i.e., they extend concentric one to each other, wherein they are in particular aligned along a common straight line. Thereby an advantageous design of the coupling device can be achieved, in particular a space saving design which further enables easy alignment and coupling of the coupling units.

The outer surface of the first coupling unit and/or the inner surface of the second coupling units may in particular extend in circumferential direction around the respective associated center axis, wherein the outer surface and/or the inner surface are in particular "closed" in circumferential direction.

In at least one embodiment of the coupling device at least one side surface, i.e. at least one section of the outer surface of the first coupling unit and/or at least one section of the inner surface of the second coupling unit, in particular all side surfaces, may at least partially, in particular completely, be planar surfaces, i.e. they are in particular not bulging or the like and may have in particular a flat section with a straight side contour section, especially in circumferential direction. This allows easy measurement after manufacturing for quality control, in particular for detection of the real dimension (i.e., in particular of deviations of the nominal dimensions) and/or control of the dimensional accuracy.

In at least one possible embodiment of the coupling device, at least one side surface may at least partially, in particular completely, be curved. Thereby, tension peaks in the side surface can be reduced. As a result, the mechanical properties of the coupling device can be improved, in particular over lifetime.

In general, at least one coupling unit may comprise one or more side surfaces, which are flat and one or more side surfaces, which are at least partially curved. However, in a preferred embodiment of a coupling device, all side surfaces are either flat or curved.

Is a side surface of the protruding portion curved, in at least one possible embodiment of the coupling device, in particular at least one outer surface of the protruding portion has a convex curved shape. Is a side surface of the recess portion curved, in at least one possible embodiment of the coupling device, in particular at least one inner surface of the recess portion has a concave curved shape. Alternatively, the outer surface of the protruding portion may comprise at least one concave shaped side surface and the inner surface of the recess may comprise at least one convex shaped side surface.

In one embodiment of a coupling device, in particular in a preferred embodiment, at least one outer surface of the protruding portion has a convex curved shape and/or at least one inner surface of the protruding portion has a concave curved shape, wherein the curvature is in particular extending in circumferential direction and preferably constant in coupling direction and/or protruding direction and/or recess direction.

In one embodiment of a coupling device, at least one contour comprises at least one circular arc-shaped section, whereby the circular arc-shaped section extends over a defined arc length of the side section, wherein the defined arc length may in particular at least 1 mm but be preferably in a range from 1 mm to 30%, 40%, 50%, 55%, 60%, 65%, 70%, 75%, 80%, 90% or 100% of the complete path length of respective side section.

At least one contour may comprise at least one section with a defined arc length along the shape of the contour following a section of a circumference of a circle with a defined and constant radius.

In one embodiment of a coupling device, in particular in an embodiment with the side surfaces extending in parallel to the coupling direction and not inclined to the coupling direction, the first surface of the first coupling unit and the second surface of the second coupling unit may be designed such that in a duly coupled state, they abut one another, at least partially or completely, in particular such that, preferably in addition to a form locking between the two coupling parts, a friction locking is created, at least under a normal force or pressure applied in coupling direction.

In one possible embodiment of a coupling device, the coupling device, in particular the two coupling units, may be designed such the first surface and the second surface each are extending in a plane orientated perpendicular to the coupling axis, wherein in particular the depth of the recess of the second coupling unit may be in coupling direction greater than the height of the protruding portion of the first coupling unit in coupling direction. Thereby, a situation can be avoided in which, upon coupling, an upper side of the protruding portion comes into contact with a bottom of the recess, resulting in a blockage before the side surfaces establish a locked connection and/or before the first surface and the second surface are duly in contact with each other.

To increase coupling strength, the coupling device, in particular the coupling units, may be designed such that, in particular in an embodiment with the side surfaces extending in parallel to the coupling direction and not inclined to the coupling direction, in a duly coupled state, the first surface and the second surface can be pressed onto each other such also a friction locking is caused between them, at least under a normal force or pressure applied in coupling direction.

In at least one possible embodiment of the coupling device, at least one coupling unit may comprise a flange extending radially outwards and comprising a defined number of mounting holes, in particular circular through holes, extending with their longitudinal axis parallel to the coupling direction for fixedly mounting the coupling unit on a respective module of a modular robot. Thereby, an easy and space saving mounting to a robot module can be achieved.

In one embodiment, the mounting holes may in particular be arranged such that their longitudinal axis are located all with the same radius to the center axis of the coupling unit, wherein the mounting holes may in particular be distributed regularly in circumferential direction.

In one embodiment, in particular in a preferred embodiment, the number of mounting holes of at least one coupling unit may be in particular an integer multiple of the number of sides of the polygon-like shape associated to said coupling unit. This allows a very space saving arrangement of the mounting holes around the polygon-like shape in the flange. As a result, a coupling device with a flange having a small radius can be provided with the advantage of a good accessibility, also in difficult-to-reach zones or areas.

In at least one possible embodiment of the coupling device, the flange may radially extend outwards from the polygon-like shape and surround the polygon-like shape in circumferential direction at least partly, in particular completely, wherein the first surface and the second surface each may in particular be part of the flange. The first surface may in particular extend from the bottom of the protruding portion radially outwards along the flange. The second surface may in particular extend from the top of the recess radially outwards along the flange.

In at least one possible embodiment of the coupling device, at least one coupling unit, in particular the flange of at least one coupling unit, may comprise an alignment groove in its outer circumferential surface, in particular an alignment groove extending in coupling direction, wherein in particular both the first coupling unit and the second coupling unit each comprise such an alignment groove. By the alignment groove, which is in particular well visible, an alignment of the two coupling units during coupling is facilitated. For good visibility, the alignment groove may for example have a width of 1,5 mm and a depth of 2 mm, but also other dimensions are possible. However, the dimension of the alignment groove should be selected such there is no significant negative influence on the mechanical properties of the coupling unit(s).

In case both coupling units comprise an alignment groove, the alignment grooves may in particular designed such that in a coupled state in particular the alignment groove of the first coupling unit and the alignment groove of the second coupling unit extends along a common straight line in parallel to the coupling axis.

In at least one possible embodiment of the coupling device, at least one coupling unit is configured for receiving/holding in its center area, in particular in its center area facing towards the other coupling unit of the coupling device, a printed circuit board (PCB).

In at least one possible embodiment of the coupling device, at least one coupling unit comprises an opening in its center area, wherein the opening may in particular extend in a plane perpendicular to the coupling direction. The opening may in particular be configured as an opening through which one or more cables for data and/or power supply, in particular of a printed circuit board which is arranged or can be arranged in the center area of the coupling unit facing towards the other coupling unit of the coupling device, can be passed.

The coupling device, in particular at least one coupling unit, may comprise a printed circuit board, wherein the printed circuit board may be mounted, in particular releasably, at an area adjacent or surrounding, at least partially, the opening. Thereby, in a very easy manner a detachable and very space saving electrical connection may be provided between the coupling units.

At least one PCB may in particular be arranged such in the coupling unit that its circuit board level extends in parallel to the corresponding surface of the respective coupling unit and/or perpendicular to the coupling direction. To achieve in parallel mounting of the PCB, at least one PCB may in particular be configured for mounting of the PCB to the coupling unit via three mounting points, for example by screws or the like, wherein, if necessary, washers or similar inserts can be used for height adjustment, in particular made of plastic or another material with suitable conductivity or a combination thereof, to ensure a secure contact between the PCBs.

In at least one possible embodiment, at least one coupling unit may comprise or be made of metal, wherein at least one coupling unit may in particular may be manufactured, at least partly, by turning, milling (circumferential and/or face) or broaching or a combination thereof. Manufacturing may also include one or more steps of drilling. At least one surface may be grinded and/or polished at least partly. In some embodiments, non-circular turning may be used for at least one manufacturing step.

In at least one possible embodiment, one of the first and second coupling units is configured to receive a first printed circuit board comprising one or more flat electrical contact surface whilst the other one may be configured to receive a second printed circuit board comprising spring loaded electrical contact pins. Thereby, in a very easy manner a detachable and very space saving electrical connection may be provided between the coupling units via the printed circuit board, which allows easy and quick coupling of the modules without more difficult to connect parts as, e.g., plugs, insertion pins or the like.

In a further embodiment, the coupling device is in particular configured such that in a coupled state of the coupling device, if the coupling device comprises a first printed circuit board with a flat electrical contact surface and a second printed circuit board comprising spring loaded electrical contact pins, the electrical contact pins of the second printed circuit board are pressed onto the flat contact surface of the first printed circuit board, in particular with sufficient initial pre-load, such that an electrical contact or connection between the first printed circuit board and the second printed circuit board is established.

Thereby, in a very easy manner a detachable, very space saving and reliable electrical connection may be provided between the coupling units via the printed circuit board, which allows easy and quick coupling of the modules without more difficult to connect parts as, e.g., plugs, insertion pins or the like.

In a preferred embodiment, the first printed circuit board may be associated to the first coupling unit with the protruding section, and the second printed circuit board may be associated to the second coupling unit with the recess, wherein the first printed circuit board may in particular be arranged such in the coupling unit that it does not protrude over the protruding section in coupling direction. The second printed circuit board may in particular be arranged at the bottom of the recess of the second coupling unit.

In at least one possible embodiment of the coupling device, at least one coupling unit comprises aluminum or is made of aluminum, in particular at least one of the first and second surfaces and/or at least one side surface. At least one coupling unit may comprise, for example, AlZn4,5Mg1 and/or Al Zn5,5MgCu.

Aluminum has due to its low density an advantage ratio of stiffness/strength-to-weight and facilitates high acceleration of the robot arm whilst comprising suitable mechanical properties, which means it can support significant loads while being relatively lightweight. Further, aluminum also offers excellent corrosion resistance, depending on the alloy, providing good protection against saltwater, acid, and other corrosive environments. This allows the use under corrosive conditions. Additionally, aluminum has a high melting point of approximately 660°C, making it suitable for applications under higher temperatures. Another advantage of aluminum is its good thermal conductivity, which means it can efficiently transfer heat away from a component, thereby supporting heat transfer, for example, from a PCB mounted to a coupling unit of the coupling device. Aluminum is also easy to clean and easy to machine. Furthermore, aluminum is a relatively cost-effective option compared to other metals like steel and titanium.

In at least one possible embodiment of a coupling device according to the present invention, in particular at least one of the first and second surfaces and/or at least one side surface is at least partially, in particular completely, soft anodized or hard anodized,

"Anodizing" in the sense of the present application may denote a method of treating aluminum that involves the use of an electrochemical process, in particular the anodic oxidation, to form an oxide layer on the material. This oxide layer forms a durable and wear-resistant protective layer on the aluminum, which is also decorative. Anodizing has the advantage that no additional layer has to be applied to the aluminum. Instead, anodizing creates a layer that is formed from the existing aluminum with the result that the oxide layer is fully integrated into the material and forms a strong molecular bond with the basis aluminum material, wherein in particular an oxide and/or hydroxide is formed by converting the uppermost layer of the original aluminum material. Further, by anodizing a non-conductive surface layer can be created, which may in some cases advantageous for robot module comprising electronic components.

The layer thickness of such an anodized layer (the oxide/hydroxide layer) of a surface of the coupling device, may in particular be in a range from 5 to 25 µm, depending on the intended use case. For some applications, for example, a layer thickness of the anodized layer of 5 to 10 µm is sufficient while others require 15, 20 or 25 µm layer thickness.

In at least one embodiment of a coupling device, at least one surface, in particular at least one of the first and second surfaces and/or at least one side surface (i.e., in particular at least a part of the outer (side) surface of the protruding portion and/or an inner (side) surface of the recess), has at least partially a hardness in a range from 50 to 500 HB (Brinell hardness), wherein preferably at least one of these surfaces has at least partially a hardness of at least 100 HB, 150 HB, 200 HB, 250 HB, 300 HB, 350 HB, 400 HB, 450 HB or 500 HB. Thereby, the risk of damage of the surface can be reduced, in particular wear and/or damage due to excessive surface pressure.

For advantageous coupling in some embodiments in particular at least one surface, in particular at least one of the first and second surfaces and/or at least one side surface section, may partially have an average roughness Ra in a range from 0,1 µm to 25 µm, preferably in a range from 0,1 µm to 12,5 µm, 10 µm, 9 µm, 8 µm, 7 µm, 6 µm, 5 µm, 4 µm, 3 µm, 2 µm, 1 µm or 0,5 µm.

For improving the coupling strength and to avoid unintended de-coupling, in at least one possible embodiment, the coupling device may further comprise a clamping device for clamping the first coupling unit and the second coupling unit one to each other, wherein the clamping device may in particular be configured to apply a clamping force in a direction parallel to the coupling direction, thereby pressing the first coupling unit and the second coupling unit at least partly against each other, in particular such that the outer surface of the protruding portion and the inner surface of the recess are pressed against each other, in particular along a polygon-like shaped contour, and/or such the first surface and the second surface are pressed against each other, in particular in coupling direction, wherein the coupling device is in particular designed such that the first surface and the second surface can only be pressed against each other if the side surface extend in parallel to the coupling direction, i.e., if the side surface are not inclined to the coupling direction, to ensure proper locking between the side surfaces of the protruding portion and the recess.

In at least one possible embodiment of the coupling device, the clamping device may comprise a clamp, in particular a clamp being configured to grip the two flanges of the first coupling unit and the second coupling unit together in circumferential direction and press the first coupling unit and the second coupling unit against each other in axial direction parallel to the coupling direction. Thereby, coupling strength can in an easy manner be increased and safe coupling can be ensured.

In one embodiment, at least one coupling unit may comprise, on the opposite side of the flange and facing away from the first and/or second surface, a clamping surface, in particular a cone shaped and inclined clamping surface. Thereby, with a circumferential clamp a sufficient clamping force can be applied very effectively and space savingly.

In one embodiment, at least clamping surface may have an average roughness Ra in a range from 0,1 µm to 25 µm, in particular in a range from 0,1 µm to 12,5 µm, 10 µm, 9 µm, 8 µm, 7 µm, 6 µm, 5 µm, 4 µm, 3 µm, 2 µm, 1 µm or 0,5 µm.

The inner surfaces of the clamp may in particular correspond to the surface geometry of the clamping surfaces of the coupling unit(s) to enable a proper and safe clamping.

For an easy assembly of the clamping device to secure the coupling of the first coupling unit and the second coupling unit, the clamping device, in particular the clamp, may comprise two halves which may in particular be configured for being locked to each other, in particular screwed one to each other, for example by two screws positioned opposite to each other and extending in a plane perpendicular to the coupling direction with opposite directions in a tangential direction with respect to the center axes of the coupling device. Thereby, a precise and symmetric locking with precise and in particular symmetric clamping force can be achieved.

Instead of being lockable by two screws, the two halves may alternatively be connected via a flange on one side such that only one screw, for example, or any other of an appropriate locking mechanism is required. Further designs of the clamping device are also possible.

A coupling unit according to the second aspect of the present invention is configured for a coupling device according to the first aspect of the present invention.

In at least one embodiment the coupling unit comprises means to be mounted, in particular releasably, to a module of a modular robot to enable coupling of the module. This allows flexible selection and exchange of a coupling unit in order to provide an appropriate one for coupling a module of a modular robot to another one.

A module for a modular robot, in particular for a modular industrial robot according to the third aspect of the present invention, comprises at least one coupling unit of a coupling device according to the first aspect of the present invention and/or at least one coupling unit according to the second aspect of the present invention. Due to the coupling device or the coupling unit(s), a module for a modular robot can securely attached and communicate with at least one other appropriate configured module or robot segment. A module according to the third aspect of the invention enables in particular flexible reconfiguration and scalability of a modular robot's structure and capabilities. Due to its coupling unit the module can easily be connected or detached from a main robotic structure of a corresponding modular robot, allowing for reconfiguration and upgrade of individual components.

In at least one embodiment, the module may be configurable for different use cases and/or different modular robots. The module may comprise one or more integrated components and/or assemblies that provide specific functions, capabilities and/or features to a modular robot. The module may include one or more various sensors, for example a vision, acoustic or tactile sensor. The module may include one or more actuation device, such as a motors or a gripper. The module may include a communication device, such as a Wi-Fi or Ethernet device or interface. The module may include a data processing apparatus, for example for processing of data for computer vision and/or machine learning algorithms or any other processing. The module may include a user interface, providing access to the module's devices and functionality.

In one possible embodiment, a part of at least one module may be configured as a drive module, which comprises a motor for providing a movement of a modular robot. Another part of the module may be configured as a link module, in particular as a robot arm or the like. One module may comprise an end effector, for example a gripper, sensing means or the like.

A modular robot, in particular a modular industrial robot, according to the fourth aspect of the present invention, comprises a coupling device according to the first aspect of the invention and/or at least one coupling unit according to the second aspect of the invention and/or at least one module according to the third aspect of the present invention.

A modular robot according to the present invention is designed to be easily reconfigured, upgraded, or modified by adding or replacing modules, wherein these advantages are achieved by a coupling device according to the first aspect of the invention and/or at least one coupling unit according to the second aspect of the invention and/or at least one module according to the third aspect of the present invention.

A method for at least partially assembling a modular robot, in particular for at least partially assembling an industrial modular robot according to the fifth aspect of the present invention, wherein the method comprises the following steps:
- providing a first module according to the third aspect of the present invention including a first coupling unit of a coupling device according to the first aspect of the present invention,
- providing a second module according to the third aspect of the present invention including a second coupling unit of a coupling device according to the first aspect of the present invention, and
- coupling the first module and the second module by coupling the first coupling unit with the second coupling unit.

In at least one embodiment of a method according to the fifth aspect of the invention, the first and second coupling units to be coupled are provided based on their real dimensions and their tolerances matching, wherein in particular the real dimensions of the protruding portion and of the recess are considered. This allows improved coupling in this area and improved torque transmission, in particular if coupling units are selected to be combined which have tolerances forming a transition fit or a pressing fit between the protruding portion and the recess when duly coupled for use.

In at least one embodiment of the method for and/or during coupling at least one coupling unit may be subjected with a defined temperature or a defined temperature curve or gradient for cooling and/or heating in order to facilitate the coupling.

In at least one embodiment of the method, after duly coupling of the coupling units, the coupling may be ensured by attaching a clamping device, in particular a pre-described clamping device, which is in particular configured to grip the coupling device in circumferential direction and to create a clamping pressure in coupling direction.

The preferred embodiments presented with reference to a coupling device according to the first aspect of the invention and its advantages apply correspondingly to the other aspects of the invention, in particular to a coupling unit, a module, a modular robot, and a method for at least partially assembling a modular robot as well and vice versa.

Further features of the invention are shown in the claims, the figures, and the description of the figures. All the features and combinations of features mentioned above in the description as well as the features and combinations of features mentioned below in the description of the figures and/or shown alone or in combination in the figures can be used not only in the combination as indicated or shown in each case, but also in other combinations or on their own so far it can technically be realized.

### BRIEF DESCRIPTION OF THE DRAWINGS

The aspects of the present invention defined above, and further aspects of the invention are apparent from the examples will now be explained in more detail by means of a preferred embodiment example and with reference to the accompanying, but not limiting drawings. The drawings are in particular to illustrate the technical features of embodiments of the present invention more clearly.

In the following the accompanying drawings provided for describing possible embodiments are introduced briefly. The accompanying drawings and their description are merely some embodiments of the present invention, modifications on these embodiments are possible without departing from the scope of protection of the present invention as defined by the claims.

The drawings show:
- **Fig. 1:**: an explosion view of a first exemplary embodiment of a modular industrial robot according to the fourth aspect of the present invention,
- **Figs. 2 and 3:**: different sections of the modular robot in Fig, 1 in an enlarged view,
- **Figs. 4 to 7:**: different views of a first exemplary embodiment of a coupling device according to the first aspect of the present invention comprising a first exemplary embodiment of a first coupling unit and a second coupling unit according to the second aspect of the present invention,
- **Figs. 8 to 10:**: different views of the first coupling unit of the coupling device from Figs. 4 to 7
- **Figs. 11 to 13:**: different views of the second coupling unit of the coupling device from Figs. 4 to 7,
- **Figs. 14 to 17:**: different views of a second exemplary embodiment of a coupling device according to the first aspect of the present invention comprising a second exemplary embodiment of a first coupling unit and a second coupling unit according to the second aspect of the present invention,
- **Figs. 18 to 20:**: different views of the first coupling unit of the coupling device from Figs. 14 to 17,
- **Figs. 21 to 23:**: different views of the second coupling unit of the coupling device from Figs. 14 to 17, and
- **Fig. 24:**: a schematic flow chart of an exemplary embodiment of a method according to the present invention.

### DETAILED DESCRIPTION OF EMBODIMENTS

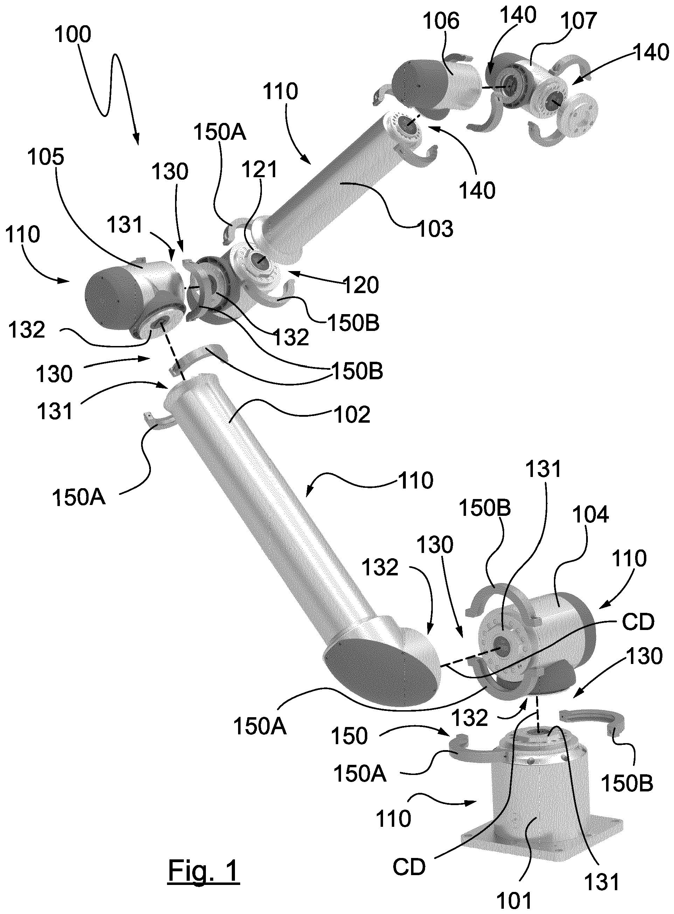

**Fig.** 1 illustrates an exploded view of a first exemplary embodiment of a modular industrial robot 100 according to the fourth aspect of the present invention, highlighting different exemplary embodiments of coupling devices 120, 130 according to the first aspect of the present invention which are used to connect various modules 110 of the robot 100.

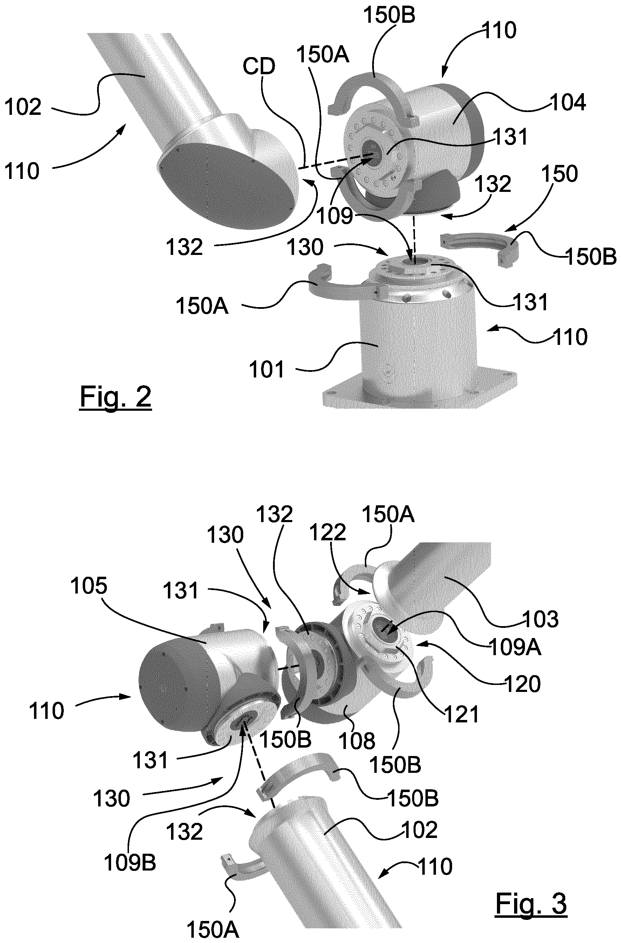

**Fig. 2** shows an enlarged view of the robot in the area around the base 101 and the respective coupling devices 130.

**Fig. 3** shows an enlarged view of the robot in the area around the joint with coupling device 120.

The modular robot 100 illustrated exemplarily in Fig. 1 comprises a base 101, two robot arms 102 and 103 and several modules 110 each comprising an electric drive 104, 105, 106, 107 and 108 and being configured to drive one of the robot's axes.

Via the coupling devices 120, 130 the several modules can be coupled, in particular in a coupling direction CD, one to each other.

The multiple modules 110 are of different types, each equipped with at least a first coupling unit 121, 131 and/or the second coupling unit 122, 132 according to the third aspect of the present invention, wherein the first coupling units 121, 131 are designed to be releasably coupled in a coupling direction CD to one of the second coupling units 122, 132 and vice versa.

The robot 100 comprises a base 101 being part of a first module 110. The base 101 comprises a cylindrical housing with an electric motor inside as a drive for a first robot axis, wherein at its top a first coupling unit 131 of a first exemplary coupling device 130 is mounted. The first coupling unit 131 is mounted to the base 101 via several screws being arranged regularly along a defined radius around a center axis of the coupling unit 130, wherein the center axis coincidence with the coupling direction CD of said coupling device 130.

The associated coupling device 130 further comprises a second coupling unit 132 which is mounted at the bottom side of a short annular or circular or cylindrical section of a second module 110, which in this case is a drive module 110 comprising a cylindrical housing and another electric motor 104 as a drive for a second axis of the modular robot 100.

The drive module 110, housing the electric drive 104, comprises in addition to the second coupling unit 132 also a first coupling unit 131 of another coupling device 130, wherein said additional first coupling unit 131 is mounted to the opposite end, in particular to the opposite face end, of the cylindrical housing surrounding the electric drive 104, wherein the center axis/coupling direction CD of the other coupling device 130 is extending perpendicular to that of the coupling device 130 for coupling the base 101 with the module comprising the electric drive 104.

The second coupling device 130 also comprises a second coupling unit 132, which is configured to be releasably coupled with the associated first coupling module 131 of the drive module, wherein the second coupling unit 132 is mounted at a first end of a robot arm 102 forming another module 110.

The robot arm 102 is further configured to be coupled via a third coupling device 132 to another drive module 110 comprising an electric drive 105 for a third robot axis, wherein said drive module 110 is further configured to be coupled via another coupling device 130 with a subsequent drive module with a further electric drive 108 (see Fig. 3).

Said subsequent drive module comprises also a cylindrical body for housing an electric drive 108, wherein on one end face of the cylindrical housing a first coupling unit 121 of another exemplary embodiment of a coupling device 120 according to the first aspect of the invention is mounted. The first coupling unit 121 is also configured to be releasably coupled with an associated second coupling unit 122 (see Fig. 3), which is mounted at the bottom end of the second robot arm 103 and designed correspondingly to coupling unit 121. The first coupling unit 121 is also mounted to the cylindrical housing via several screws being arranged regularly along a defined radius around the center axis/coupling direction CD of the associated coupling device 120. By this coupling device 120 the subsequent drive module can releasably be coupled to the second robot arm 103.

The other end of the second robot arm 103 can releasably be coupled with another drive module 106 via another coupling device 140, wherein said drive module is configured to be coupled to another subsequent module via a further coupling device 140, wherein in this embodiment of an exemplary modular robot 100, the coupling devices 140 are examples for another design of coupling devices which are not being encompassed by the present invention.

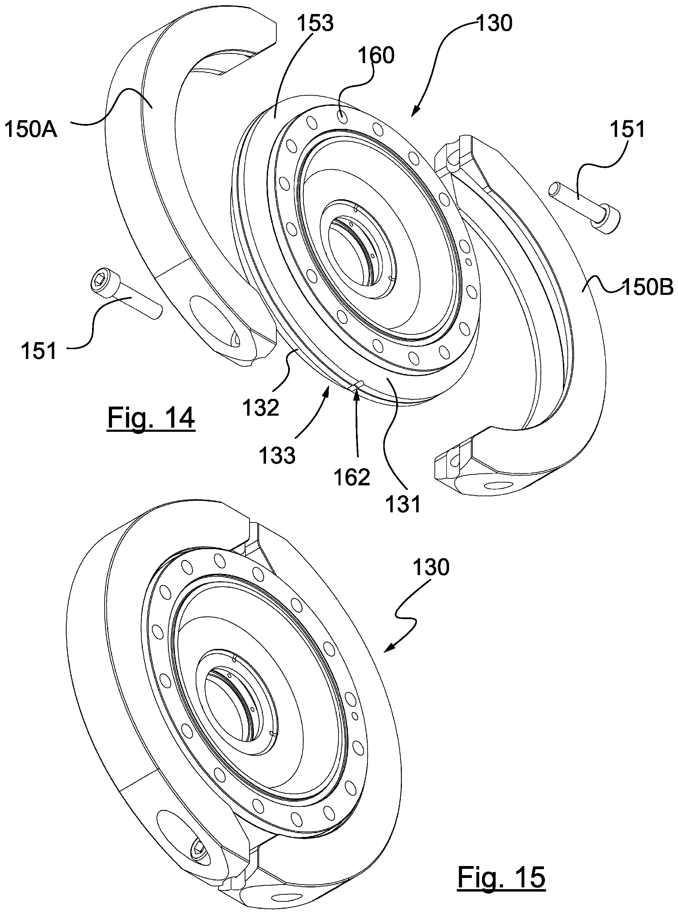

The first coupling unit 131 and the second coupling unit 132 are both parts of the associated coupling device 130 configured to be releasably coupled one to each other in coupling direction CD. In a coupled state of the coupling device 130, the first coupling unit 131 and the second coupling unit 132 can be clamped against each other by a clamping device 150, which is configured to apply a clamping force in a direction parallel to the coupling direction CD to the first and second coupling units 131 and 132 to ensure safe coupling. In the exemplary embodiment illustrated in Fig. 1, the clamping device 150 comprises a clamp with two clamp-halves 150A and 150B which can be fixed one to each other by two screws (cf. Fig. 14).

Each of the coupling devices 120, 130 and 140 of the modular robot illustrated in Fig. 1 is configured to establish an electrical connection for transmission/transfer of power, data and/or communication signals between the modules 110 in a coupled state. Said electrical connection can, as exemplarily shown in Fig. 1, be established via printed circuit boards 109 (109A, 109B) arranged in the center of the coupling units 121, 131, 122, 132. In the illustrated embodiment of a modular robot 100, each of the first coupling units 121, 131 comprises a first printed circuit board 109A with flat electric contacts, wherein each of the second coupling units 122, 132 comprises the second printed circuit board 109B with electric contacts comprising spring loaded pins being configured to be pressed against the flat contacts of the first printed circuit board 109A of the respective coupling device 120, 130 in a coupled state of the coupling device 120, 130.

The modular design of the robot 100 allows an easy and flexible assembly and disassembly of the robot 100, enabling customization and flexibility in industrial applications, wherein the coupling devices 120, 130 facilitate the connection and integration of different robot modules 110 according to the respective application.

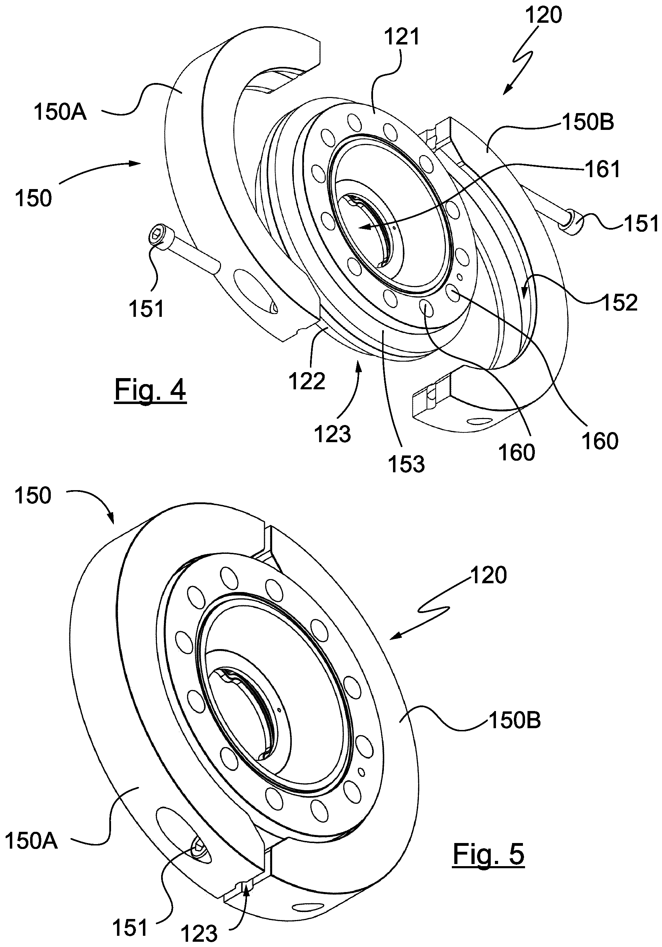

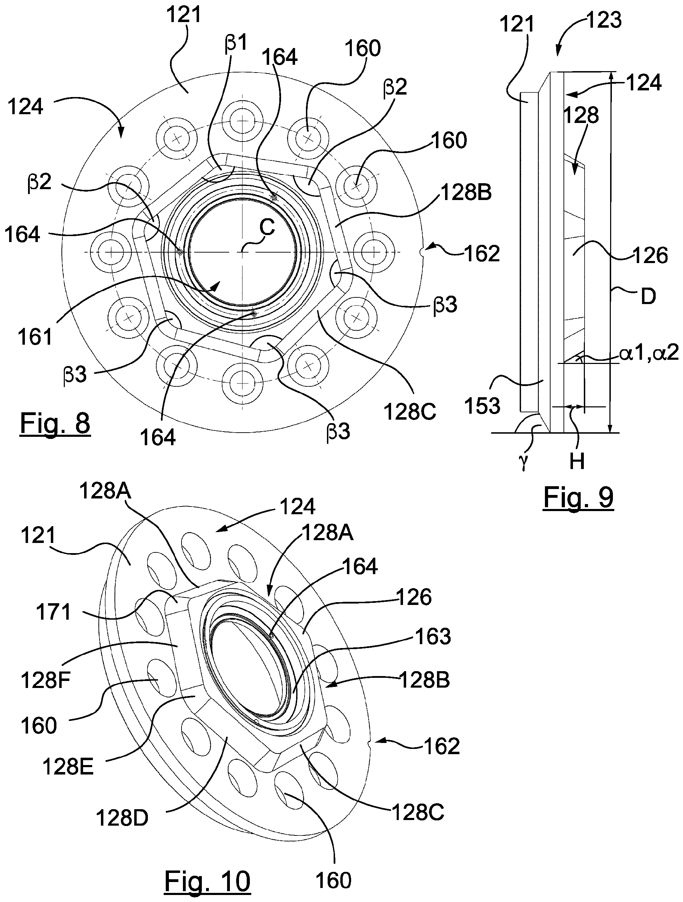

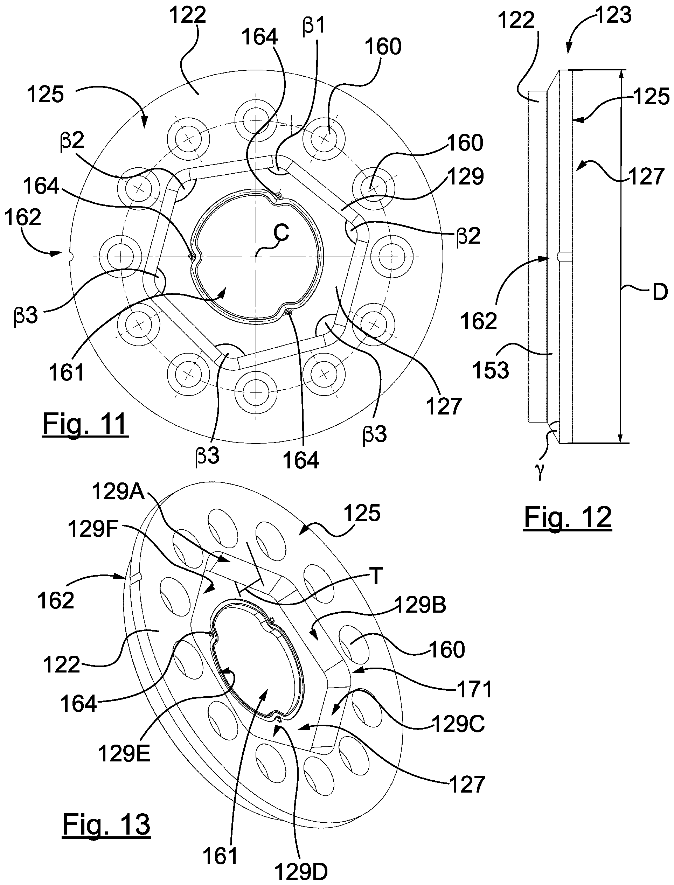

**Figs. 4** to **7** show different views of the coupling device 120 with its first coupling unit 121 and its second coupling unit 122, wherein **Figs. 8** to **10** show different views of the first coupling unit 121 of the coupling device 120 from Figs. 4 to 7, and wherein **Figs. 11** to **13** show different views of the second coupling unit 122 of the coupling device from Figs. 4 to 7.

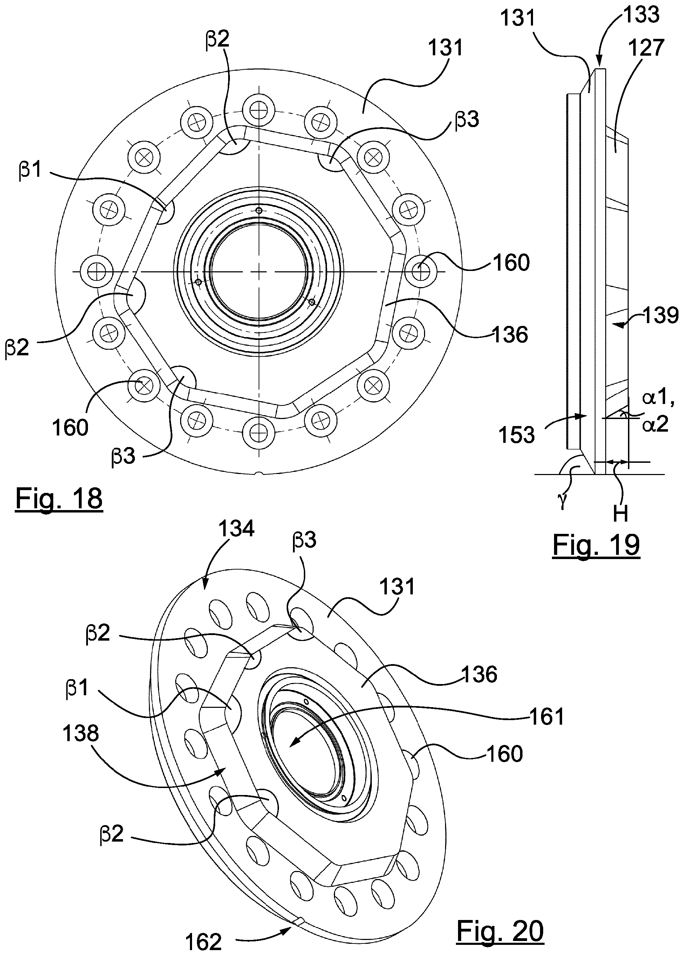

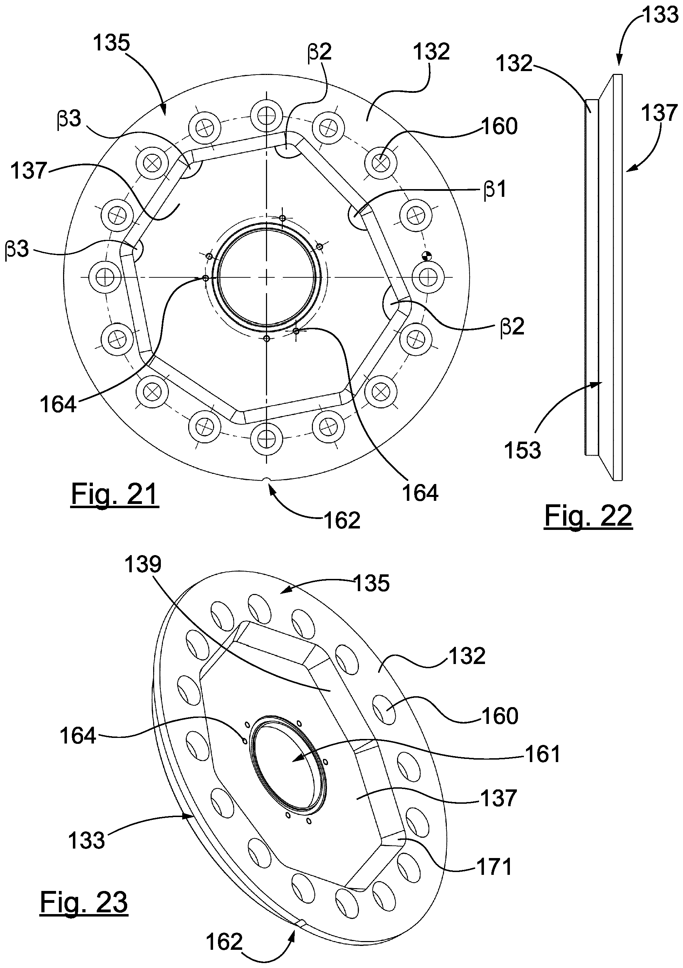

**Figs. 14** to **17** show different views of the coupling device 130 with its first coupling unit 131 and its second coupling unit 132, wherein **Figs. 18** to **20** show different views of the first coupling unit of the coupling device from Figs. 14 to 17, and wherein **Figs. 21** to **23** show different views of the second coupling unit of the coupling device from Figs. 14 to 17.

Each of the first coupling units 121 and 131 feature a first surface 124, 134 and each of the second coupling units 122 and 132 a second surface 125, 135.

The first coupling units 121, 131 include a protruding coupling portion 126, 136 with an outer surface 128, 138, while the second coupling units 122, 132 each have a recess 127, 137 with an inner surface 129, 139 to receive the protruding portion of the corresponding counter coupling unit 121, 131. The outer contour of the protruding portion 126, 136 and the inner contour of the recess 127, 137 have a polygon-like shape in a sectional plane perpendicular to the coupling direction CD.

The coupling units 121, 122, 131, 132 are equipped with flanges 123, 133 extending radially outwards, which include mounting holes 160 for securing the coupling units 121, 131, 122, 132 to the housing of the modules 110. In the presented embodiments, these mounting holes 160 are arranged such that their longitudinal axes are parallel to the coupling direction CD and are distributed regularly in the circumferential direction.

The figure also shows clamping devices 150, 150A, 150B, which include clamps 150A, 150B, in particular clamp-halves 150A, 150B, configured to grip the flanges 123, 133 of the coupling units 121, 122, 131, 132 and press them together in the axial direction parallel to the coupling direction CD. The clamps/clamp-halves 150A and 150B can be screwed together by two screws 151 being arranged opposite to each other (or with a 180 degree angle in between). The clamping devices 150 ensure a secure connection between the modules 110 by exerting pressure on the coupling units 121, 131, 122, 132.

Additionally, the coupling units 121, 122, 131, 132 feature openings 161 in their center areas, allowing the passage of cables for data and/or power supply to the printed circuit boards 109, 109A, 109B which are shown in Fig. 1, but not in Figs. 4 to 23. These openings 161 facilitate the integration of printed circuit boards 109, which can be mounted, for example, to an area 163, here exemplarily designed as a ring 163, in particular by preferably three screws screwed via mounting holes 164 into said ring 163 surrounding the opening 161. The printed circuit boards 109 may include flat electrical contact surfaces and/or spring-loaded electrical contact pins to establish one or more electrical connections between the modules 110 as already described above.

Fig. 4 shows a partially exploded view of the coupling device 120 in an unclamped state, wherein in this illustration the design of the clamping device 150 becomes apparent, in particular of the two halves 150A and 150B and their recesses 152 configured to receive the flanges 123 of the coupling units 121 and 122.

Also, the regularly in circumferential direction distributed mounting holes 160 of coupling unit 121 and the opening 161 in the center area around center axis C extending along the coupling direction CD becomes apparent from Fig. 4. The coupling device 120 comprises a protruding portion 126 having a polygon-like shape of a 6-sided polygon, a recess 127 with the same number of sides, and 12 mounting holes 160, what is 2x, i.e., an even inter multiple, of the number of side sections 128A-128F resp. 129A-129F (cf. Figs. 8 to 13). This enables a very space saving arrangement of a high number of mounting points, in particular of screw joints, in circumferential direction outside the polygon-like shape. The higher the number of mounting points and the more regular they are distributed over the circumference, the better mechanical stress can be distributed regularly, i.e., the more critical stress maximums can be reduced.

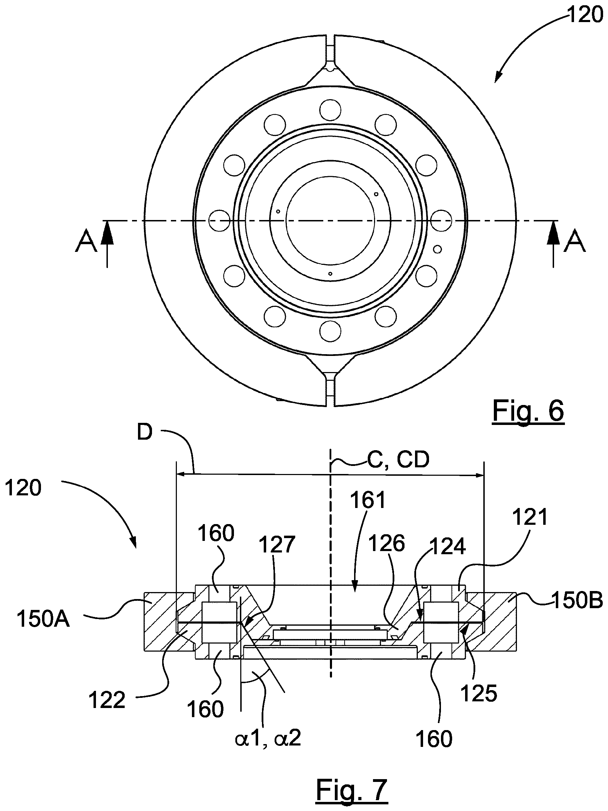

Figs. 5 and 6 show the coupling device 120 in different views in a coupled and clamped state with the clamping-halves 150A and 150B screwed together.

Fig. 7 presents a cross-sectional view along line A-A of the coupling device 120 (cf. Fig. 6), providing a detailed look at the internal structure and its design and at the components of said coupling device 120.

From Fig. 7, the first surface 124 and the protruding portion 126 of the first coupling unit 121 become apparent, and as well the second surface 125 and the recess 127 of the second coupling unit 122. The outer surface 128 (cf. Fig. 9) of the protruding portion 126 is inclined inwards from the first surface 124 by a first inclination angle α1 from a vertical axis, wherein the inner surface 129 of the recess 127 is inclined inwards from the second surface 125 by second inclination angle α2 from a vertical axis, in particular from the same vertical axis as the first inclination angle α1 with respect to the coupling device 120.

From Fig. 7 also the clamping of the two coupling units 121, 122 ensured by the clamping device 150 becomes apparent. For improved claiming, the clamping surfaces 153 (cf. Fig. 9 and 12) are cone-shaped and inclined by angle γ such that by tightening of the clamping device 150, in particular by tightening of the screws 151, axial pressure on the coupling units 121, 122 can be increased thereby increase locking strength between the coupling units 121, 122, wherein in particular the pressure by which the protruding portion 126 is pressed into the recess 127, is increased.

From Figs. 8 to 10 in particular the polygon-like shape of the outer contour of the protruding portion 126 of the first coupling unit 121 becomes apparent, wherein this embodiment of a coupling unit 120 comprises a protruding portion 126 with an irregular polygon-like shape with 6 sides, resulting in 6 side sections with 6 outer side section surfaces 128A-128F, wherein a protrusion height H is approximately 20% of the maximum outer diameter D of the flange 123 respectively the first surface 124.

This first coupling unit 121 includes a first surface 124 and a coupling portion protruding from the first surface 124 in the coupling direction CD, having an outer surface 128. The second coupling unit 122 includes a second surface 125 and a recess 127 for at least partially receiving the protruding coupling portion of the first coupling unit 121, having an inner surface 129. The outer contour of the protruding portion 126 of the first coupling unit 121 and the inner contour of the recess 127 of the second coupling unit 122 each have a polygon-like shape in at least one sectional plane perpendicular to the coupling direction CD.

Fig. 8 illustrates a front view of the first coupling unit 121 already described previously, which is part of coupling device 120 described above. In this illustration, the polygon-like outer contour of the coupling portion 126 is clearly visible with its multiple sides labeled as 128A, 128B, 128C, 128D, 128E, and 128F. These sides form part of the outer surface 128 of the coupling portion 126, wherein in the presented embodiment, the corners or transition areas between the sides 128A-128F are rounded, in particular for mechanical stress reduction.

The polygon-like shape is irregular, as indicated by the different inner angles β1, β2, and β3 between the sides, wherein inner angle β1 is sandwiched between the two inner angle β2, and wherein the remaining angles are β3-angles. This irregularity of the polygon ensures that the coupling device 121 can only be coupled to an appropriate and correspondingly designed second coupling device. Further, this enables proper alignment of the first coupling device 121 with a second coupling device 122 during coupling, ensuring establishing correct and functioning electrical connections between the modules.

To facilitate coupling, in this embodiment of a coupling device 120, the first coupling unit 121 and the second coupling device, further comprise an alignment grove 162 in the outer circumferential surface of their flanges 123, 123, wherein the first coupling unit 121 and the second coupling unit are properly aligned, when their alignment grooves 162 extend along the same straight line and this in particular parallel to their center axis C respectively parallel to the coupling direction CD.

Fig. 9 provides a side view of the coupling unit 121, highlighting the protrusion height H of the coupling portion 126 in the coupling direction. The maximum outer diameter D of the first surface 124 is also depicted. The outer side surface sections 128 are inclined inward by a first inclination angle α1 towards the center axis C, wherein the first inclination angle α1 is in this embodiment corresponding to the second inclination angle α2 of the recess 127 of the second coupling unit 122.

The coupling unit 121 includes further an outer surface 153 serving as a clamping surface 153 on the opposite side of the flange 123, which is inclined by a further angle γ and may in particular be cone shaped. This clamping surface 153 is intended to engage with the clamping device, ensuring secure attachment of the coupling units.

Fig. 10 presents a perspective view of the coupling unit 121, showcasing the polygon-like outer contour of the coupling portion 126. The sides 128A to 128F are clearly visible, is well apparent. Also, the opening 161 for the passage of cables for data and/or power supply, facilitating the integration of electronic components such as printed circuit boards within the modular robot 100. The coupling unit 121 is configured to receive a printed circuit board, which can be mounted via mounting holes 164 in the area 164 adjacent to or surrounding the opening 161.

Fig. 11 shows a top view of the second coupling unit 122 of the coupling device 120. The mounting holes 160 are also arranged such that their longitudinal axes are located at the same radius to the center axis C of the coupling unit. The recess 127 has an inner surface comprising multiple inner side surface sections 129A-129F, forming a polygon-like shape with different inner angles β1, β2, and β3 between the sides as the first coupling unit 121 also has. The inner surface sections 129A-129F are arranged to correspond to the outer surface sections of the protruding portion 126 of the first coupling unit 121. An opening 161 is also present in the center area of the coupling unit 122, allowing for the passage of cables for data and/or power supply. The opening 161 is surrounded by the inner surface sections 129A-129F. The coupling unit 122 also features a clamping surface 153 on the opposite side of the flange 123, facing away from the second surface 125 and being inclined by angle γ (see Fig. 12).

Fig. 12 illustrates a side view of the second coupling unit 122. The flange 123 is shown extending radially outwards from the second surface 125. The recess 127 is depicted with its inner surface sections 129A-129F forming the irregular polygon-like shape. The clamping surface 153 is shown on the opposite side of the flange 123, inclined by the angle γ towards the center axis C. The maximum outer diameter D of the second surface 125 is also indicated. The clamping surface 153 is designed to engage with a clamping device 150 to press the first and second coupling units 121, 122 together in the axial direction parallel to the coupling direction CD.

Fig. 13 provides a perspective view of the second coupling unit 122. The second surface 125 is shown with the mounting holes 160 distributed regularly around the circumference. The recess 127 is depicted with its inner surface sections 129A-129F forming the irregular polygon-like shape. The inner surface sections 129A-129F are inclined inwards towards the center axis C, creating the polygon-like shape with different inner angles β1, β2, and β3 (cf. Fig. 11). The opening 161 in the center area of the coupling unit is also visible, surrounded by the inner surface sections 129A-129F. The flange 123 extends radially outwards, with the mounting holes 160 located on this flange.

Fig. 14 illustrates an exploded view of the coupling device 130, which is in general designed similar to the coupling device 120 described in detail above but only having other dimensions. In particular, the first coupling unit 131 differs therein that it comprises a protruding portion 136 with an 8-sided irregular polygon-like shape and 16 mounting holes 160 instead of only a 6-sided irregular polygon-like shape with 12 mounting holes as the coupling unit 121 comprises. Correspondingly, the second coupling unit 132 of the coupling device 130 illustrated in Fig. 14 comprises a recess 137 with an 8-sided irregular polygon-like shape and also 16 mounting holes.

Fig. 15 provides a perspective view of the assembled coupling device 130, illustrating how the components fit together when fully assembled/coupled. The figure shows the coupling device 130 in its coupled state, with the clamp segments 150A and 150B securely fastened around the flanges 133 of the coupling units 131, 132. This view emphasizes the compact and robust design of the coupling device 130, highlighting its suitability for use in modular robots 100 where reliable and efficient coupling of modules 110 is essential.

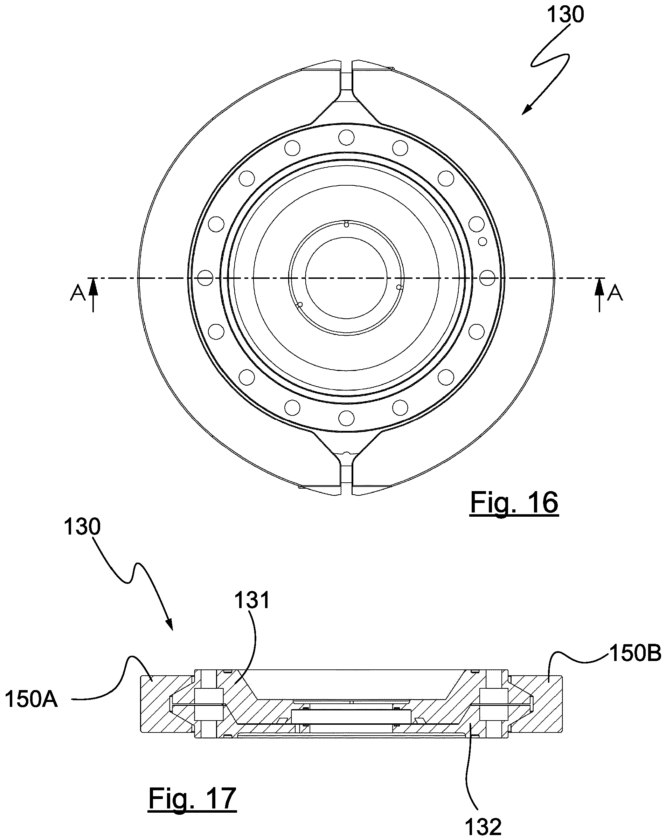

Fig. 16 shows a top view of a coupling device 130.

Fig. 17 illustrates a cross-sectional view of the coupling device 130 along the line A-A as indicated in Fig. 16. This cross-sectional view provides a detailed look at the internal structure of the coupling device 130. The first coupling unit 131 is shown with its protruding portion 136 that extends into the recess 137 in the second coupling unit 132. The outer surface 138 of the protruding portion 136 and the inner surface 139 of the recess 137 are designed to fit together, ensuring a secure connection between the two coupling units 131, 132.

The cross-sectional view also reveals the presence of clamping device with its halves 150A and 150B, which are used to hold the two coupling units 131, 132 together. The clamping device is also designed to apply pressure in the axial direction, parallel to the coupling direction CD via the clamping halves 150A, 150B which are screwed together to ensure a tight and secure fit between the coupling units 131, 132.

Fig. 18 illustrates a top view of the coupling unit 131 of the coupling device 130. This coupling unit 131 is also characterized by its irregular polygon-like shape with inner angles β1, β2, and β3 between its side sections. The coupling unit 131 includes 16 mounting holes 160 as already mentioned above which are regularly distributed in circumferential direction. These holes 160 are designed to facilitate the attachment of the coupling unit 131 to a module 110 of a modular robot 100. The mounting holes 160 are arranged such that their longitudinal axes are equidistant from the center of the coupling unit, enabling uniform distribution of mechanical stresses while requiring minimum space.

Fig. 19 provides a side view of the coupling unit 131. The coupling unit 131 comprises also a flange 133 that extends radially outward, providing a second surface 134 (cf. Fig. 20) for mounting and securing the coupling unit 131 to a robot module 110. The flange 133 is equipped with a clamping surface 153, which is inclined by angle γ and may be cone-shaped, designed to engage with a corresponding clamping device 150. This clamping surface 153 facilitates the axial compression of the coupling units 131, 132 of the coupling device 130, enhancing the mechanical stability and strength of the connection.

Fig. 20 depicts a perspective view of the coupling unit 132, highlighting its three-dimensional structure. The polygon-like shape with its three different inner angles β1, β2, and β3 is clearly visible. The coupling unit 132 includes a protruding portion 136 with an outer surface 138, which is designed to fit into the recess 137 of the corresponding coupling unit 132 (cf. Figs. 21 to 23). The outer surface 138 may curved, in particular convex, contributing to the secure engagement between the coupling units 131, 132 and reducing surface pressure. Additionally, the coupling unit 132 features an opening 161 at its center, which can be used for routing cables or other components necessary for the operation of the modular robot.

Fig. 21 shows a front view of the second coupling unit 132 of coupling device 130. The second coupling unit 132 comprises a second surface 135 and a recess 137 for at least partially receiving a protruding coupling portion 136 of the first coupling unit 131. The inner surface 139 of the recess 137 has an 8-sided polygon-like shape in a sectional plane perpendicular to the coupling direction CD. The polygon-like shape is irregular, comprising three different types of inner angles: β1, β2, and β3. The second coupling unit 132 also includes a flange 133 extending radially outwards and comprising 16 mounting holes 160. The mounting holes 160 are circular through holes extending with their longitudinal axis parallel to the coupling direction CD. The mounting holes 160 are arranged such that their longitudinal axes are located at the same radius from the center axis of the coupling unit 132 and are distributed regularly in the circumferential direction. The number of mounting holes 160 is an integer multiple (here: 2) of the number of sides of the polygon-like shape associated with the coupling unit 132. Additionally, the second coupling unit 132 comprises an opening 161 in its center area, configured as an opening through which one or more cables for data and/or power supply can be passed. The opening 161 is surrounded by a series of smaller holes 164, which are intended for mounting a printed circuit board.

Fig. 22 illustrates a side view of the second coupling unit 132. The flange 133 is shown extending radially outwards having a second surface 135. On the opposite side and facing away from the second surface 135, there is a clamping surface 153. The clamping surface 153 is cone-shaped and inclined by angle γ, facilitating the engagement with a clamping device that grips the flanges 133 of the first and second coupling units 131, 132 together in the circumferential direction and presses them against each other in the axial direction parallel to the coupling direction CD.

Fig. 23 provides an isometric view of the second coupling unit 132. The polygon-like shape of the recess 137 is clearly visible, with the inner surface 139 forming the sides of the irregular polygon. The flange 133 extends radially outwards, and the mounting holes 160 are distributed regularly around the circumference. The opening 161 in the center area is surrounded by smaller holes 164, which are intended for mounting a printed circuit board. The second coupling unit 132 also comprises rounded corners or transition areas 171 between the side sections of the inner surface 139.

The figures provide a detailed view of the coupling devices 120, 130 and their components for the coupling process between the modules 110 of the modular robot 100. The polygon-like shape of the outer contour of the protruding portions 126, 136 of the first coupling units 121,131 and the inner contour of the recesses 127, 137 of the second coupling units 122, 132 ensure a secure and precise coupling. The clamping device 150, with its clamps 150A and 150B, provides additional stability and ensures that the coupling units 121 and 122 respectively 131 and 132 are pressed together in the axial direction. The inclusion of the printed circuit boards 109A and 109B with electrical contact surfaces and pins ensures a reliable electrical connection between the coupled modules 110. The figures also highlight the importance of the inclination angles of the side surface sections in ensuring a secure fit between the coupling units 121 and 122.

To reduce the mobile mass of the modular robot, in a preferred embodiment, at least one module 110 and/or at least one coupling unit 120, 130 comprises aluminum or is made of it, for example AlZn4,5Mg1 or Al Zn5,5MgCu.

To minimizes surface damage, in particular wear and/or surface damage caused by pressure, in particular at least one surface 124, 134, 125, 135, 128A-128F and/or 129A-129F and/or the clamping surface 153 may be anodized (soft or hard).

To minimizes surface damage, in particular wear and/or surface damage caused by pressure, in particular at least one side surface 128A-128F and/or 129A-129F may be at least partially, in particular completely, curved, wherein in particular at least one outer surface 128-128F of the protruding portion 126, 136 may have a convex curved shape and in particular at least one inner surface 129A-129F of the recess 127, 137 may have a concave curved shape, wherein the curvature is in particular constant in coupling direction.

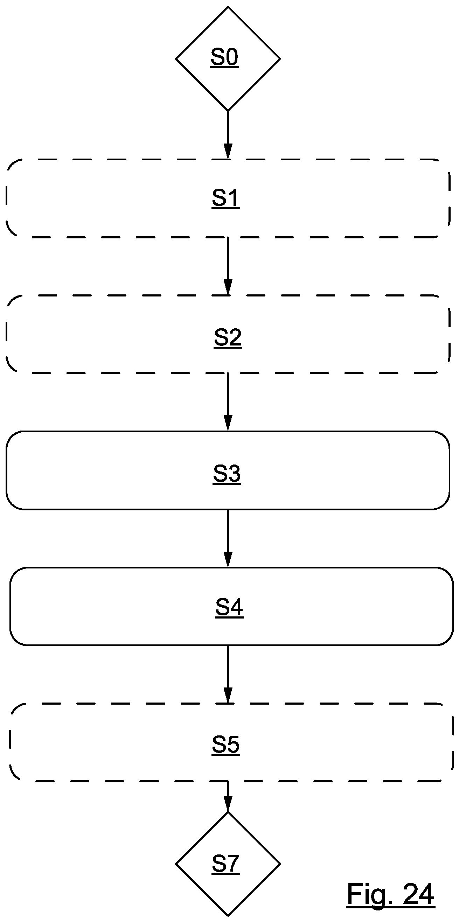

**Fig. 24** illustrates a flowchart depicting a sequence of method steps S0 to S7 of an exemplary embodiment of a method for assembling a modular robot system according to the fifth aspect of the present invention.

The process begins at step S0, represented by a diamond box. The start may be characterized by a decision point or an initial condition that must be satisfied before proceeding. This step may involve one or more preliminary checks or conditions that need to be met to initiate the assembly process.

In at least one subsequent step S3, a first module 110 according to the third aspect of the present invention including a first coupling unit 121, 131 of a coupling device 120, 130 according to the first aspect of the present invention is provided. Further, in this step S3 or in a separate step, and a second module 110 according to the third aspect of the present invention including a second coupling unit 122, 132 of a coupling device 120, 130 according to the first aspect of the present invention is provided.

In at least one embodiment of a method according to the fifth aspect of the invention, the first and second coupling units 121, 122 respectively 131, 132 to be coupled may, in particular in an optional step S1 (illustrated with a box with a dashed line) be selected before being provided based on their real dimensions and their tolerances matching to each other, wherein in particular the real dimensions of the protruding portion 126, 136 and of the recess 127, 137 are considered. This allows improved coupling in this area and improved torque transmission, in particular if the pairs of coupling units 121, 122 respectively 131, 132 are selected to be combined such that they have tolerances being suitable for forming a transition fit or a pressing fit between the protruding portion 126, 136 and the recess 127, 137 when duly coupled for use.

In at least one embodiment of the method for and/or during coupling at least one coupling unit 121, 122, 131, 132 may, in particular in an optional step S2 (illustrated with a box with a dashed line), be subjected to a defined temperature or a defined temperature curve or gradient for cooling and/or heating in order to facilitate the coupling.

After provision of the modules 110 to be coupled with their coupling units 121, 122 respectively 131, 132 to be coupled, in step S4, the first module 110 and the second module 110 are coupled by coupling the first coupling unit 121, 131 with the second coupling unit 122, 132.

In at least one embodiment of the method, after duly coupling of the coupling units 121, 122 respectively 131, 132, in particular in an optional step S5, the coupling may be ensured by attaching a clamping device 150, in particular a pre-described clamping device 150, which is in particular configured to grip the coupling device 120, 130 in circumferential direction and to create a clamping pressure in coupling direction CD.

### List of reference signs

- 100: modular industrial robot according to the present invention
- 101: base
- 102, 103: robot arm
- 104-108: electric motor / drive
- 109: printed circuit board
- 109A: first printed circuit board with one or more flat electrical contact surfaces
- 109B: second printed circuit board spring loaded pins as electrical contacts
- 110: module according to the present invention
- 120, 130: coupling device according to the present invention
- 121, 131: first coupling unit according to the present invention
- 122, 132: second coupling unit according to the present invention
- 123, 133: flange
- 124, 134: first surface
- 125, 135: second surface
- 126, 136: protruding portion (coupling portion)
- 127, 137: recess (coupling recess)
- 128, 138: outer surface
- 128A-128F: side sections of outer surface
- 129, 139: inner surface
- 129A-129F: side sections of inner surface
- 140: other example of a coupling device
- 150: clamping device
- 150A, 150B: clamp-half
- 151: screw
- 152: recess in the clamp-half
- 153: clamping surface
- 160: mounting holes
- 161: opening
- 162: alignment groove
- 163: area adjacent/surrounding opening; ring for supporting a PCB
- 164: mounting holes for mounting PCB
- 171: rounded corner

- C: center axis
- CD: coupling direction
- D: outer diameter
- H: protruding height
- T: recess depth
- S0...S7: methods steps

- α1: inclination angle of the protruding portion
- α2: inclination angle of the recess
- β1, β2, β3: inner angle of the polygon
- γ: inclination angle of the clamping surface

## Claims

1. A coupling device (120, 130) for coupling two modules (110) of a modular robot, in particular for coupling two modules (110) of a modular industrial robot (100), wherein the coupling device (120, 130) comprises:
a first coupling unit (121, 131) and a second coupling unit (122, 132) configured to be mounted on a respective module (110) of a modular robot (100), and further configured to be releasably coupled one to each other in a coupling direction (CD),
wherein the first coupling unit (121, 131) comprises a first surface (124, 134) and a coupling portion (126, 136) protruding from the first surface (124, 134) in coupling direction and having an outer surface (128, 138),
wherein the second coupling unit (122, 132) comprises a second surface (125, 135) and a recess (127, 137) for at least partially receiving the protruding coupling portion (126, 136) of the first coupling unit (121, 131) and having an inner surface (129, 139),
**characterized in that** an outer contour of the protruding portion (126, 136) of the first coupling unit (121, 131) and an inner contour of the recess of the second coupling unit (122, 132) each have a polygon-like shape in at least one sectional plane perpendicular to the coupling direction (CD), at least in sections.

2. The coupling device (120, 130) according to claim 1,
wherein a maximum protrusion height (H) of the coupling portion in coupling direction is less than 20% of a maximum outer diameter (D) of the first surface (124, 134), in particular less than 15%, 14%, 13%, 12%, 11%, 10%, 9%, 8%, 7% or 6% of a maximum outer diameter (D) of the first surface (124, 134), and
wherein a minimum protrusion height (H) of the coupling portion in coupling direction (CD) is at least 3%, 4% or 5% of the maximum outer diameter (D) of the first surface (124, 134).

3. The coupling device (120, 130) according to claim 1 or 2,
wherein the outer contour and the inner contour each have a polygon-like shape with at least 3 sides, in particular with at least 4 or 5 sides, preferably with at least 6 or 8 sides, but in particular with no more than 20 sides, in particular with the outer surface (128, 138) comprising a corresponding number of outer side surface sections (128A-128F) each forming a part of the outer surface (128, 138), and with the inner surface comprising a corresponding number of inner side surface sections (129A-129F) each forming a part of the inner surface (129, 139), and
wherein the outer contour and the inner contour in particular each have a polygon-like shape of a regular polygon or a polygon-like shape of an irregular polygon.

4. The coupling device (120, 130) according to any one of the previous claims,
wherein the outer contour and the inner contour each have a polygon-like shape of an irregular polygon with at least one inner angle (b1) between two neighbored sides of the irregular polygon-liked shape being different from the remaining other inner angles (b2, b3),
wherein in particular the irregular polygon-like shape comprises three different types of inner angles (b1, b2, b3), in particular one with a first inner angle value (b1), two with a second inner angle value (b2) and the remaining ones with a third inner angle value (b3).

5. The coupling device (120, 130) according to any one of the previous claims,
wherein the outer side surface sections of the outer surface of the protruding portion (126, 136) of the first coupling unit (121, 131) are in a protruding direction inclined inwards by a first inclination angle (a1) towards a center axis (C) of the protruding portion (126, 136) extending parallel to the coupling direction (CD),
wherein at least one of the inner side surface sections (129A-129F) of the inner surface (129, 139) of the recess (127, 137) of the second coupling unit is in a recess direction inclined inwards by a second inclination angle (a2) towards a center axis (C) of the recess (127, 137) extending parallel to the coupling direction (CD), wherein the first inclination angle (a1) is in particular 10°, 20°, 25°, 30°, 35°, 40°, 45°, 50°, 55° or 60°, and
wherein the second inclination angle (a2) is in particular at least substantially, preferably nominally exactly, the same as the first inclination angle (a1).

6. The coupling device (120, 130) according to any one of the previous claims,
wherein at least one side surface (128A-128F; 129A-129F) is at least partially, in particular completely, curved,
wherein in particular at least one outer surface (128-128F) of the protruding portion (126, 136) has a convex curved shape and in particular at least one inner surface (129A-129F) of the recess (127, 137) has a concave curved shape, wherein the curvature is in particular constant in coupling direction.

7. The coupling device (120, 130) according to any one of the previous claims,
wherein at least one coupling unit (121, 131; 122, 132) comprises a flange (123, 133) extending radially outwards and comprising a defined number of mounting holes (160), in particular circular through holes, extending with their longitudinal axis parallel to the coupling direction (CD) for fixedly mounting the coupling unit (121, 131; 122, 132) on a respective module (110) of a modular robot (100),
wherein the mounting holes (160) are particularly arranged such that their longitudinal axis are located all with the same radius to the center axis (C) of the coupling unit (121, 131; 122, 132),
wherein the mounting holes (160) are in particular distributed regularly in circumferential direction, and
wherein the number of mounting holes (160) of at least one coupling unit (121, 131; 122, 132) is in particular an integer multiple of the number of sides (128-128F; 129A-129F) of the polygon-like shape associated to said coupling unit.

8. The coupling device (120, 130) according to any one of the previous claims,
wherein at least one coupling unit (121, 131; 122, 132) comprises an opening (161) in its center area which is extending in particular in a plane perpendicular to the coupling direction (CD),
wherein the opening (161) is configured as an opening (161) through which one or more cables for data and/or power supply, in particular of a printed circuit board (109) which is arranged or can be arranged in the center area of the coupling unit (121, 131; 122, 132) facing towards the other coupling unit (122, 132; 121, 131) of the coupling device (120, 130), can be passed,
wherein the printed circuit board (109) is mounted or can be mounted, in particular releasably, at an area (163) adjacent or surrounding, at least partially, the opening (161).

9. The coupling device (120, 130) according to claim 8,
wherein one of the first and second coupling units (121, 131; 122, 132) is configured to receive a first printed circuit board (109A) comprising one or more flat electrical contact surface whilst the other one is configured to receive a second printed circuit board (109B) comprising spring loaded electrical contact pins, and
wherein the coupling device (120, 130) is in particular configured such that in a coupled state of the coupling device (120, 130), if the coupling device (120, 130) comprises a first printed circuit board (109A) with a flat electrical contact surface and a second printed circuit board (109B) comprising spring loaded electrical contact pins, the electrical contact pins of the second printed circuit board (109B) are pressed onto the flat contact surface of the first printed circuit board (109A), in particular with sufficient initial pre-load such that an electrical contact or connection between the first printed circuit board (109A) and the second printed circuit (109B) board is established.

10. The coupling device (120, 130) according to any one of the previous claims,
wherein at least one coupling unit (120, 130) comprises aluminum or is made of aluminum, in particular at least one of the first and second surfaces (124, 134; 125, 135) and/or at least one side surface (128A-128F; 129A-129F),
wherein in particular at least one of the first and second surfaces (124, 134; 125, 135) and/or at least one side surface (128A-128F; 129A-129F) is at least partially, in particular completely, soft anodized or hard anodized,
wherein in particular at least one surface (124, 134; 125, 135; 128A-128F; 129A-129F), in particular at least one of the first and second surfaces (124, 134; 125, 135) and/or at least one side surface (128A-128F; 129A-129F), has an average roughness Ra in a range from 0,1 µm to 25 µm, preferably in a range from 0,1 µm to 12,5 µm, 10 µm, 9 µm, 8 µm, 7 µm, 6 µm, 5 µm, 4 µm, 3 µm, 2 µm, 1 µm or 0,5 µm, and/or
wherein at least one surface (124, 134; 125, 135; 128A-128F; 129A-129F), in particular at least one of the first and second surfaces (124, 134; 125, 135) and/or at least one side surface (128A-128F; 129A-129F), has a hardness in a range from 50 to 500 HBW (Brinell hardness).

11. The coupling device (120, 130) according to any one of the previous claims, wherein the coupling device (120, 130) comprises a clamping device (150), the clamping device (150) comprising a clamp being configured to grip the two flanges (123, 133) of the first coupling unit (121, 131) and the second coupling unit (122, 132) together in circumferential direction and press the first coupling unit (121, 131) and the second coupling unit (122, 132) against each other in axial direction parallel to the coupling direction (CD),
wherein in particular at least one coupling unit (121, 131) comprises on the opposite side of the flange (123, 133) and facing away from the first and/or second surface (124, 134; 125, 135) a clamping surface (153), in particular a cone shaped and inclined clamping surface (153),
wherein in particular at least one clamping surface (153) has an average roughness Ra in a range from 0,1 µm to 25 µm, preferably in a range from 0,1 µm to 12,5 µm, 10 µm, 9 µm, 8 µm, 7 µm, 6 µm, 5 µm, 4 µm, 3 µm, 2 µm, 1 µm or 0,5 µm.

12. A coupling unit (121, 131; 122, 132) configured for a coupling device (120, 130) according to any one of the claims 1 to 11.

13. A module (110) for a modular robot (100), in particular for a modular industrial robot (100), comprising at least one coupling unit (121, 131; 122, 132) of a coupling device (120, 130) according to any one of the claims 1 to 11 and/or at least one coupling unit (121, 131; 122, 132) according to claim 12.

14. A modular robot (100), in particular a modular industrial robot (100), comprising a coupling device (120, 130) according to any one of the claims 1 to 11 and/or at least one coupling unit (121, 131; 122, 132) according to claim 12 and/or at least one module (110) according to claim 13.

15. A method for at least partially assembling a modular robot (100), in particular for at least partially assembling a modular industrial robot (100) according to claim 14, comprising the following steps:
- providing a first module (110) according to claim 13 including a first coupling unit (121, 31) of a coupling device (120, 130) according to any one of the claims 1 to 11,
- providing a second module (110) according to claim 13 including a second coupling unit (122, 132) of a coupling device (120, 130) according to any one of the claims 1 to 11, and
- coupling the first module (110) and the second module (110) by coupling the first coupling unit (121, 131) with the second coupling unit (122, 132).
